# EUROPÄISCHE PATENTSCHRIFT

(11) **EP 1 637 783 B1**
(45) Veröffentlichungstag und Bekanntmachung des Hinweises auf die Patenterteilung: **01.08.2012**
(21) Anmeldenummer: 04022353.9
(22) Anmeldetag: 20.09.2004
(51) Int. Cl.: F16K 3/26, F01D 17/14, F01D 21/16

(54) **Schnellschluss-Stellventilkombination für eine Dampfturbine**
Valve combination for a steam turbine with a fast closing valve and a regulating valve
Combinaison de soupape pour turbine à vapeur avec une soupape à fermeture rapide et une soupape de régulation

(43) Veröffentlichungstag der Anmeldung: 22.03.2006
(73) Patentinhaber: SIEMENS AKTIENGESELLSCHAFT, 80333 München (DE)
(72) Erfinder: Kommel, Erhard, 58452 Witten (DE); Wechsung, Michael, 45470 Muelheim (DE)

(56) Entgegenhaltungen:
- DE-A1- 10 219 948
- DE-B- 1 160 252
- GB-A- 190 905 269

## Beschreibung

Die Erfindung betrifft eine Schnellschluss-Stellventilkombination für eine Dampfturbine mit einem Schnellschlussventil und einem Stellventil.

Schnellschluss-Stellventilkombinationen der oben genannten Art werden bei Dampfturbinen insbesondere als Umleitventil - und/oder Mitteldruckventilanordnung verwendet. Sie weisen jeweils ein Schnellschlussventil mit einem nachgeschalteten Stellventil auf. Eine derartige Umleitventilanordnung ist beispielsweise in einer Beipass- oder Umleitung zu einem Kondensator der Dampfturbine angeordnet.

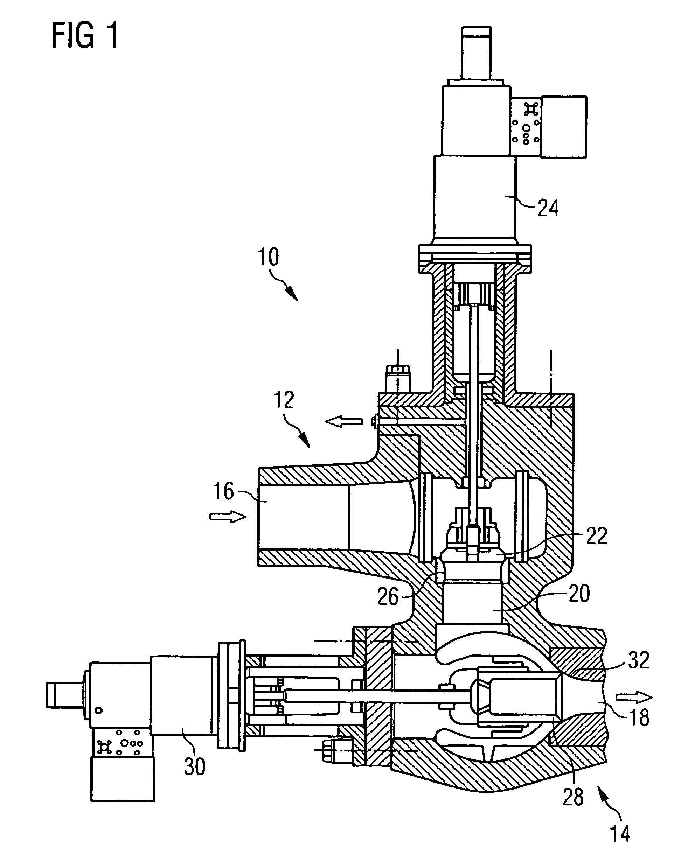

Bei bekannten Konstruktionen von Schnellschluss-Stellventilkombinationen (wie sie beispielsweise in der nachfolgend noch erläuterten Fig. 1 dargestellt sind) wird Dampf Z-förmig durch die Schnellschluss-Stellventilkombination geleitet. Ferner wird bei diesen Schnellschluss-Stellventilkombinationen am Stellventil die vom Dampf durchströmbare Querschnittsfläche durch ein Zusammenwirken eines linear geführten Ventilkegels und eines zugehörigen Ventilsitzes begrenzt.

In der De 102 19 948 A1, als nächstliegender Sfaud der Technik angesehen, wird eine Ventilanordnung für die Regelung der Frischdampfzufuhr in eine Dampfturbine mit zwei Regelventilen, die in Serie geschaltet sind, offenbart.

Der Erfindung liegt die Aufgabe zugrunde eine Schnellschluss-Stellventilkombination der eingangs genannten Art dahingehend zu verbessern, dass sie kostengünstiger hergestellt werden kann und über ihre Lebensdauer hinweg verringerte Wartungs - und Betriebskosten aufweist.

Diese Aufgabe wird erfindungsgemäß mit einer gattungsgemäßen Schnellschluss-Stellventilkombination gemäß den Merkmalen des Anspruchs 1 gelöst.

Die erfindungsgemäße Lösung ist eine Neukonstruktion eines Stellventils an einer Schnellschluss-Stellventilkombination, die zu einer vergleichsweise kleinen Bauform der Ventilkombination mit insgesamt weniger Bauteilen führt. Diese Verbesserungen bringen insbesondere eine Kosteneinsparung in Material und Montage mit sich.

Mit der erfindungsgemäßen Lösung entfällt innerhalb der Schnellschluss-Stellventilkombination ferner eine Strömungsumlenkung, so dass erfindungsgemäß insgesamt die Leistungsverluste der Ventilkombination verringert sind. Dies hat wiederum Wirkungsgradverbesserungen zur Folge, die sich während der gesamten Lebensdauer der erfindungsgemäßen Schnellschluss-Stellventilkombination vorteilhaft auswirken.

Damit an einer erfindungsgemäßen Schnellschluss-Stellventilkombination ein drehbar gelagerter Ventilkolben bewegt werden kann, sollte auf einen Linearantrieb, beispielsweise in Gestalt eines elektrohydraulischen Stellantriebs, zurückgegriffen werden und dessen lineare Bewegung dann in eine Drehbewegung umgesetzt werden. Diese Umsetzung kann vorteilhaft mit einer evolventen Verzahnung erfolgen.

Bei einer vorteilhaften Weiterbildung der erfindungsgemäßen Schnellschluss-Stellventilkombination ist deren Ventilkolben mit einer kreisförmigen Querschnittsfläche gestaltet. Ein solcher Ventilkolben kann in dem zugehörigen Ventilzylinder drehbar gelagert und mit einem Drehantrieb zum Öffnen und Schließen des Stellventils bewegt werden. Der damit verwendbare Drehantrieb ist kostengünstig und erfordert vergleichsweise wenig Bauraum. Ferner sind schnelle Stellbewegungen mit kurzen Reaktionszeiten der Ventilkombination möglich. Alternativ zu einem drehbar gelagerten Ventilkolben kann ein linear bewegbarer Ventilkolben in einem Ventilzylinder eingesetzt sein.

Insbesondere für eine derartige Linearbewegung des erfindungsgemäßen Ventilkolbens können vorteilhaft herkömmliche und bewährte Antriebe verwendet werden. Damit die erfindungsgemäße Schnellschluss-Stellventilkombination den bei Dampfturbinen vorherrschenden, zum Teil sehr widrigen Umweltbedingungen über die Lebensdauer hinweg standhalten kann, sollte der für das Stellventil vorgesehene Antrieb insbesondere ein elektrohydraulischer Stellantrieb sein.

An dem erfindungsgemäßen Ventilzylinder sollten ferner vorteilhaft Führungselemente für den Ventilkolben vorgesehen sein. Solche Führungselemente sollten bei einem Linearantrieb in Gestalt mindestens einer Führungsbuchse und bei einem Drehantrieb in Form mindestens eines Kegelrollenlagers gestaltet sein. Mit solchen Führungselementen kann die Antriebsbewegung am Stellventil leichtgängig in die gewünschte Relativbewegung des Ventilkolbens relativ zum Ventilzylinder umgesetzt werden. Darüber hinaus sollten bei der erfindungsgemäßen Ventilkombination zwischen Ventilzylinder und Ventilkolben auch die Dichtelemente vorgesehen werden.

Hinsichtlich des an der erfindungsgemäßen Schnellschluss-Stellventilkombination vorgesehenen Schnellschlussventils ist es besonders vorteilhaft, wenn dieses mit einem Ventilteller bzw. -kegel gestaltet ist, der gegen einen Ventilsitz bewegbar ist. Ein derartiges Schnellschlussventil kann von bereits bekannten Ventilkombinationen übernommen werden, so dass dafür kein zusätzlicher Konstruktionsaufwand entsteht.

Alternativ zu einem Schnellschlussventil mit Ventilteller bzw. -kegel ist es besonders vorteilhaft, wenn das Schnellschlussventil in ähnlicher Bauweise wie das Stellventil mit einem Ventilkolben gebildet ist, der in einem Ventilzylinder beweglich gelagert ist und in dem eine Queröffnung ausgebildet ist, deren durchströmbare Öffnungsfläche durch Bewegen des Ventilkolbens relativ zum Ventilzylinder in ihrer Größe veränderbar ist. Der Ventilkolben und der Ventilzylinder können dabei entsprechend den oben genannten Weiterbildungen gestaltet sein. Betrieben werden kann ein solches Schnellschlussventil mit einem Linearantrieb (z.B. einem elektrohydraulischen Antrieb) oder einem Drehantrieb (der z.B. eine Linearbewegung durch eine Evolventenverzahnung in eine Drehbewegung umsetzt). Für die Funktion des Schnellschlussventils genügt es in der Regel, wenn eine Auf/Zu-Funktion sicher gewährleistet wird. Mit einer derartigen Konstruktion können für beide Ventile der erfindungsgemäßen Schnellschluss-Stellventilkombination weitgehend Gleichteile verwendet werden und es kann durch eine entsprechende Anordnung der Ventile ein Strömungsweg geschaffen werden, der innerhalb der Ventilanordnung nicht umgelenkt zu werden braucht. Strömungsverluste können dadurch weiter gesenkt werden. Darüber hinaus erfordert diese Bauart einer erfindungsgemäßen Schnellschluss-Stellventilkombination besonders wenig Bauraum und die Kosten für Material und Montage können weiter verringert werden.

Nachfolgend wird ein Ausführungsbeispiel einer erfindungsgemäßen Schnellschluss-Stellventilkombination anhand der beigefügten schematischen Zeichnungen näher erläutert.
Es zeigt:
- Fig. 1: einen Längsschnitt einer Schnellschluss-Stellventilkombination gemäß dem Stand der Technik,
- Fig. 2: einen Längsschnitt eines ersten Ausführungsbeispiels einer erfindungsgemäßen Schnellschluss-Stellventilkombination und
- Fig. 3: einen Längsschnitt eines zweiten Ausführungsbeispiels einer erfindungsgemäßen Schnellschluss-Stellventilkombination.

In Fig. 1 ist eine Schnellschluss-Stellventilkombination 10 dargestellt, die als wesentliche Elemente ein Schnellschlussventil 12 und ein Stellventil 14 aufweist. Die beiden Ventile sind zwischen einem Strömungseintritt 16 und einem Strömungsaustritt 18 angeordnet und durch einen sich quer zum Strömungseintritt 16 und zum Strömungsaustritt 18 erstreckenden Verbindungskanal 20 verbunden. Durch den Strömungseintritt 16, den Strömungsaustritt 18 und den Verbindungskanal 20 ist auf diese Weise durch die Schnellschluss-Stellventilkombination 10 insgesamt ein Z-förmiger Strömungsweg geschaffen.

Das Schnellschlussventil 12 ist mit einem Ventilteller bzw. -kegel 22 versehen, der in Längsrichtung des Verbindungskanals 20 mittels eines Schaltantriebs 24 verschiebbar ist und damit wahlweise gegen einen Ventilsitz 26 des Schnellschlussventils 12 bewegt oder von diesem abgehoben werden kann.

Das Stellventil 14 ist mit einem geführten Ventilkegel 28 gestaltet, der von einem Stellantrieb 30 in Längsrichtung des Strömungsaustritts 18 gegen einen Ventilsitz 32 bewegt werden kann.

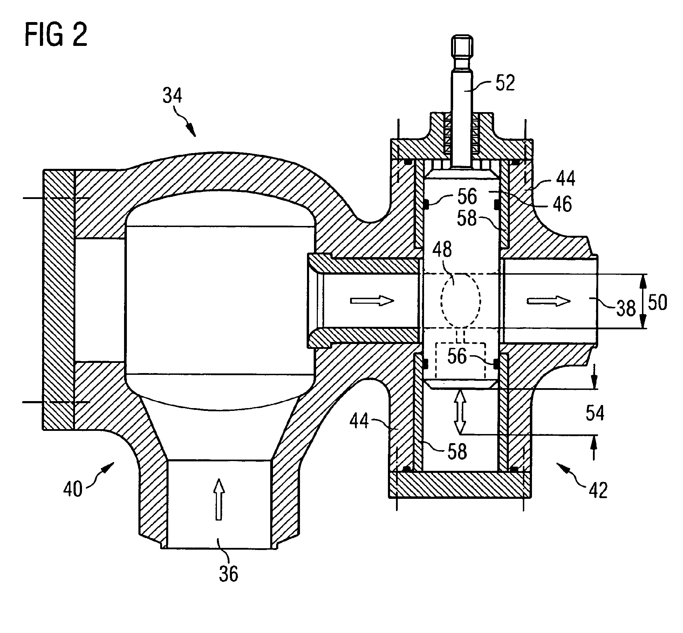

Im Gegensatz zu dieser in Fig. 1 dargestellten Schnellschluss-Stellventilkombination 10 ist in Fig. 2 eine erfindungsgemäße Schnellschluss-Stellventilkombination 34 veranschaulicht, welche einen vergleichsweise geringen Bauraum aufweist, kostengünstiger herzustellen und montieren ist und bei der darüber hinaus während des Betriebs der zugehörigen Dampfturbine geringere Leistungsverluste auftreten.

Die Schnellschluss-Stellventilkombination 34 ist mit einem Strömungseintritt 36 gestaltet, zu dem ein Strömungsaustritt 38 quer gerichtet ist. An der Umlenkung der Strömung vom Strömungseintritt 36 hin zum Strömungsaustritt 38, welche einen Winkel von zirka bzw. genau 90° umfasst, ist ein nicht näher veranschaulichtes Schnellschlussventil 40 angeordnet, welches im Wesentlichen entsprechend dem in Fig. 1 dargestellten Schnellschlussventil 12 gestaltet ist.

In Strömungsrichtung auf dieses Schnellschlussventil 40 folgend ist in der im Wesentlichen längsgerichteten Leitung des Strömungsaustritts 38 ein Stellventil 42 angeordnet. Dieses Stellventil 42 ist mit einem Ventilzylinder 44 gestaltet, der sich im Wesentlichen quer zur Längsrichtung des Strömungsaustritts 38 erstreckt und in einem Ventilkolben 46 bewegbar geführt ist.

In dem Ventilzylinder 44 ist eine Queröffnung 48 ausgebildet, die als Bohrung mit einem vorbestimmten Durchmesser 50 gestaltet ist.

Zum Bewegen des Ventilkolbens 46 innerhalb des Ventilzylinders 44 sind wahlweise zwei verschiedene Stellantriebe vorgesehen, die an einer im Bezug auf Fig. 2 oben aus dem Ventilzylinder 44 herausragenden Kolbenstange 52 angeordnet, ansonsten aber nicht näher veranschaulicht sind.

Ein erster dieser verschiedenen Stellantriebe ist als Linearantrieb gestaltet, mit dem der Ventilkolben 46 über einen Hub 54 hinweg innerhalb des Ventilzylinder 44 verschoben werden kann. Der Hub 54 ist derart groß bemessen, dass beim Verschieben des Ventilkolbens 46 die durchströmbare Öffnungsfläche der Queröffnung 48 zunächst verkleinert und schließlich vollständig verschlossen werden kann.

Als weitere Möglichkeit kann an der Kolbenstange 52 ein Drehantrieb angeordnet sein, mit dem der Ventilkolben 46 innerhalb des Ventilzylinders 46 verdreht und damit ebenfalls die durchströmbare Öffnungsfläche der Queröffnung 48 verringert bzw. vollständig verschlossen werden kann.

Im Übrigen ist auch eine Kombination eines Linearantriebs mit einem Drehantrieb und einer entsprechenden Bewegung des Ventilkolbens 46 innerhalb des Ventilzylinders 44 möglich.

Damit bei derartigen Bewegungen der Ventilkolben 46 im Ventilzylinder 44 ordnungsgemäß geführt ist, sind jeweils an den bezogen auf Fig. 1 oberen und unteren Endbereichen des Ventilkolbens 46 und des Ventilzylinders 44 Führungselemente in Form eines Dichtrings 56 bzw. einer Führungsbuchse 58 vorgesehen.

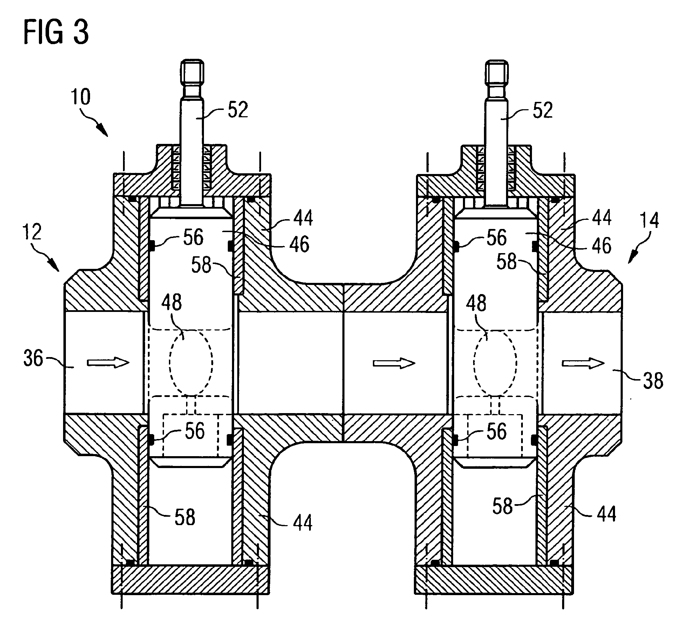

In Fig. 3 ist eine Schnellschluss-Stellventilkombination 10 dargestellt, bei der sowohl das Stellventil 14 als auch das Schnellschlussventil 12 mit einem Ventilkolben 46 gestaltet sind, welcher in einem Ventilzylinder 44 geführt ist und mit Hilfe einer Queröffnung 48 einen wahlweise zu öffnenden Strömungsweg bereitstellt. Die Ventile 12 und 14 sind dabei derart gestaltet und angeordnet, dass sich durch die Schnellschluss-Stellventilkombination 10 hindurch ein geradliniger Strömungsweg ohne Umlenkungen ergibt.

## Patentansprüche

1. Schnellschluss-Stellventilkombination (34) für eine Dampfturbine mit einem Schnellschlussventil (40) und einem Stellventil (42),
wobei das Stellventil (42) mit einem Ventilkolben (46) gebildet ist, der in einem Ventilzylinder (44) beweglich gelagert und in dem eine Queröffnung (48) ausgebildet ist, deren durchströmbare Öffnungsfläche durch Bewegen des Ventilkolbens (46) relativ zum Ventilzylinder (34) in ihrer Größe veränderbar ist,
**dadurch gekennzeichnet, dass**
für das Stellventil (42) ein als Drehantrieb gestalteter Stellantrieb vorgesehen ist, der insbesondere mit einer Evolventenverzahnung gestaltet ist,
wobei der Drehantrieb zum Öffnen und Schließen des Stellventils (42) ausgebildet ist und
ein Linearantrieb vorgesehen ist, mit dem der Ventilkolben (46) über einen Hub (54) innerhalb des Ventilzylinders (44) verschoben werden kann.

2. Schnellschluss-Stellventilkombination nach Anspruch 1,
**dadurch gekennzeichnet, dass**
der Ventilkolben (46) mit einer kreisförmigen Querschnittsfläche gestaltet ist.

3. Schnellschluss-Stellventilkombination nach Anspruch 1 oder 2,
**dadurch gekennzeichnet, dass**
für das Stellventil (42) ein elektrohydraulischer Stellantrieb vorgesehen ist.

4. Schnellschluss-Stellventilkombination nach einem der Ansprüche 1 bits 3,
**dadurch gekennzeichnet, dass**
am Ventilzylinder (44) Führungselemente (56, 58) für den Ventilkolben (46) vorgesehen sind, insbesondere in Gestalt mindestens einer Führungsbuchses (58) oder mindestens eines Kegelrollenlagers.

5. Schnellschluss-Stellventilkombination nach einem der Ansprüche 1 bis 4,
**dadurch gekennzeichnet, dass**
das Schnellschlussventil (40) mit einem Ventilteller bzw. - kegel (22) gestaltet ist, der gegen einen Ventilsitz (26) bewegbar ist.

6. Schnellschluss-Stellventilkombination nach einem der Ansprüche 1 bis 5,
**dadurch gekennzeichnet, dass**
das Schnellschlussventil (40) mit einem Ventilkolben (46) gebildet ist, der in einem Ventilzylinder (44) beweglich gelagert ist und in dem eine Queröffnung (48) ausgebildet ist, deren durchströmbare Öffnungsfläche durch Bewegen des Ventilkolbens (46) relativ zum Ventilzylinder (34) in ihrer Größe veränderbar ist.

## Claims

1. Quick-closing/regulating valve combination (34) for a steam turbine, with a quick-closing valve (40) and with a regulating valve (42), the regulating valve (42) being formed with a valve piston (46) which is mounted movably in a valve cylinder (44) and in which is formed a transverse orifice (48) whose orifice area through which flow can pass can be varied in size by the movement of the valve piston (46) in relation to the valve cylinder (34), **characterized in that**, for the regulating valve (42), a regulating drive is provided which is configured as a rotary drive and which, in particular, is configured with an involute toothing, the rotary drive being designed for opening and closing the regulating valve (42), and a linear drive being provided, by means of which the valve piston (46) can be displaced over a stroke (54) within the valve cylinder (44).

2. Quick-closing/regulating valve combination according to Claim 1, **characterized in that** the valve piston (46) is configured with a circular cross-sectional area.

3. Quick-closing/regulating valve combination according to Claim 1 or 2, **characterized in that** an electrohydraulic regulating drive is provided for the regulating valve (42).

4. Quick-closing/regulating valve combination according to one of Claims 1 to 3, **characterized in that** guide elements (56, 58), particularly in the configuration of at least one guide bush (58) or of at least one tapered roller bearing, are provided for the valve piston (46) on the valve cylinder (44).

5. Quick-closing/regulating valve combination according to one of Claims 1 to 4, **characterized in that** the quick-closing valve (40) is configured with a valve disc or valve cone (22) which can be moved against a valve seat (26).

6. Quick-closing/regulating valve combination according to one of Claims 1 to 5, **characterized in that** the quick-closing valve (40) is formed with a valve piston (46) which is mounted movably in a valve cylinder (44) and in which is formed a transverse orifice (48) whose orifice area through which flow can pass can be varied in size by the movement of the valve piston (46) in relation to the valve cylinder (34).

## Revendications

1. Combinaison (34) de vannes à fermeture rapide-de régulation pour une turbine à vapeur, comprenant une vanne ( 40 ) à fermeture rapide et une vanne ( 42 ) de régulation, dans laquelle la vanne ( 42 ) de régulation est formée d'un piston ( 46 ) de vanne, qui est monté mobile dans un cylindre ( 44 ) de vanne et dans lequel est formée une ouverture ( 48 ) transversale, dont la dimension de la surface d'ouverture par laquelle peut passer du courant peut être modifiée par déplacement du piston ( 46 ) de vanne par rapport au cylindre ( 34 ) de vanne,
**caractérisée en ce que**
il est prévu pour la vanne ( 42 ) de régulation un actionneur conformé en entraînement en rotation, qui est conformé notamment en ayant un engrenage à développante,
dans laquelle l'entraînement en rotation est constitué pour ouvrir et fermer la vanne ( 42 ) de régulation et
il est prévu un entraînement linéaire, par lequel le piston ( 46 ) de vanne peut être déplacé à l'intérieur du cylindre ( 44 ) de vanne sur une course ( 54 ).

2. Combinaison de vannes à fermeture rapide-de régulation suivant la revendication 1,
**caractérisée en ce que**
le piston ( 46 ) de vanne est conformé en ayant une surface de section transversale circulaire.

3. Combinaison de vannes à fermeture rapide-de régulation suivant la revendication 1 ou 2,
**caractérisée en ce que**
un actionneur électrohydraulique est prévu pour la vanne ( 42 ) de régulation.

4. Combinaison de vannes à fermeture rapide-de régulation suivant l'une des revendications 1 à 3,
**caractérisée en ce que**
sur le cylindre ( 44 ) de vanne sont prévus des éléments ( 56, 58 ) de guidage du piston ( 46 ) de vanne, notamment sous la forme d'au moins une douille ( 58 ) de guidage ou d'au moins un palier à rouleau conique.

5. Combinaison de vannes à fermeture rapide-de régulation suivant l'une des revendications 1 à 4,
**caractérisée en ce que**
la vanne ( 40 ) à fermeture rapide est conformée en ayant une tête ou un cône ( 22 ) de vanne, qui peut être amené sur un siège ( 26 ) de vanne.

6. Combinaison de vannes à fermeture rapide-de régulation suivant l'une des revendications 1 à 5,
**caractérisée en ce que**
la vanne ( 40 ) à fermeture rapide est formée d'un piston ( 46 ) de vanne, qui est monté mobile dans un cylindre ( 44 ) de vanne et dans lequel est formée une ouverture ( 48 ) transversale, dont la dimension de la surface d'ouverture dans laquelle peut passer un courant peut être modifiée par déplacement du piston ( 46 ) de vanne par rapport au cylindre ( 34 ) de vanne.
